# EUROPEAN PATENT SPECIFICATION

(11) **EP 2 805 620 B1**
(45) Date of publication and mention of the grant of the patent: **22.02.2017**
(21) Application number: 14169126.1
(22) Date of filing: 20.05.2014
(51) Int. Cl.: A23G 9/04, A23G 9/08, A23G 9/22

(54) **Machine for producing food mixtures in general, in particular soft ice-cream**
Maschine zur Herstellung von Nahrungsmitteln im Allgemeinen, insbesondere von Softeis
Machine de production de mélanges alimentaires en général, en particulier de glace à l'italienne

(30) Priority: 22.05.2013 IT MI20130837
(43) Date of publication of application: 26.11.2014
(73) Proprietor: Soffientini, Paolo, 26848 San Fionano (IT); Cipelletti, Emanuela, 26848 San Fiorano (IT)
(72) Inventor: Soffientini, Paolo, 26848 San Fionano (IT); Cipelletti, Emanuela, 26848 San Fiorano (IT)
(74) Representative: Siniscalco, Fabio

(56) References cited:
- EP-A2- 1 415 543
- US-A- 4 712 920
- US-A- 5 158 506

## Description

### BACKGROUND OF THE INVENTION

The object of the present invention is a machine for producing food mixtures in general, in particular soft ice-cream.

### PRIOR ART

Known machines for producing soft ice-cream normally have a container for preparing and storing and a cooled cylinder provided with stirrer. The container is connected by piping to the cylinder.

The container is suitable for receiving ingredients such as water and/or milk, sugar, powders, thickeners, and other things, for preparing soft ice-cream. The cooled cylinder receives a preset quantity of product from the container and by means of the stirrer mixes the product at a low temperature to obtain the soft ice-cream.

The soft ice-cream is then collected by the operator in the necessary quantity through a front tap of the aforesaid processing cylinder.

For cooling the processing cylinder, a refrigerating circuit is provided, the evaporator of which consists of a cylindrical spiral pipe in contact with the external wall of the processing cylinder.

The operation of this type of machine is discontinuous. In fact, when the operator starts to collect a certain quantity of soft ice-cream the machine starts operating to produce ice-cream as seen above. At the end of the production cycle, the machine switches to storage mode with intermittent switching-on of the refrigerating circuit and of the stirrer.

Whilst the ice-cream remains in the cylinder the cold internal wall can cause layered freezing of the ice-cream on the wall. This can, for example, occur in the event of incorrect loading, with excess air of the products to be processed, from the container to the processing cylinder, or if unbalanced mixtures are used to prepare the soft ice-cream, or for other reasons.

This layered freezing can alter the correct operation of the processing cylinder. For example the reading of the load of the motor of the stirrer, which is normally used to indicate the quantity and density of the product in the processing cylinder, is no longer reliable because the frozen layers of product modify the effort of the stirrer. Also the reading of the temperature of the product being processed is altered because the heat probe reads the temperature of the frozen layers. This compromises correct operation of the machine.

In serious cases the stirrer can jam, causing mechanical breakages that force the machine to be stopped for repairs.

EP-1415543-A2 teaches a method for controlling and optimising the cycle for production of ice cream depending on the mixtures used, by introducing continuously hot gases removed from the exhaust of the compressor into the main stream of refrigerating fluid, depending on the difference in temperature of the refrigerant at the inlet and outlet of the evaporator and on the consistency of the product.

### OBJECT OF THE INVENTION

The object of the present invention is to propose a machine that is able to overcome the drawbacks disclosed above.

### SHORT DESCRIPTION OF THE INVENTION

This object is achieved by a machine according to claim 1.

### SHORT DESCRIPTION OF THE DRAWINGS

In order to better understand the invention, an embodiment thereof is disclosed by way of non-limiting example in the attached drawings, in which:
fig. 1 is a schematic view of a machine for producing soft ice-cream according to the invention;
fig. 2 is a block diagram of the operation of an anti-freezing system of the machine in fig. 1.

### DETAILED DESCRIPTION OF THE INVENTION

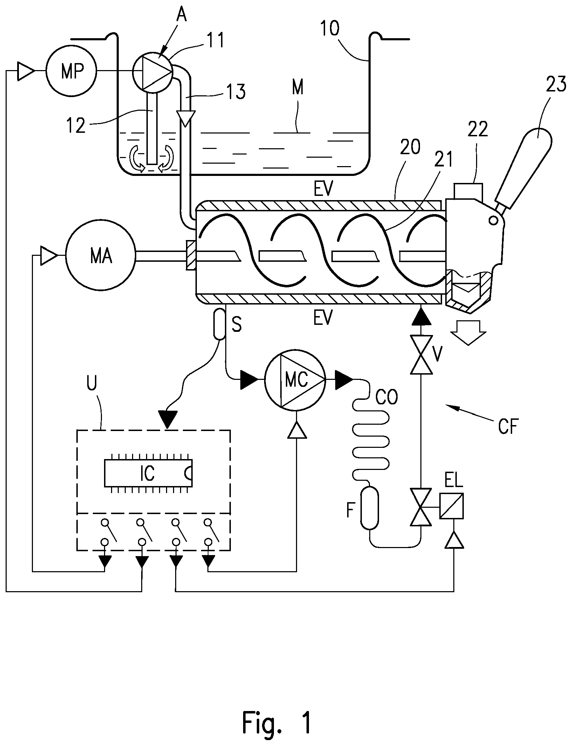

The machine illustrated in fig. 1 provides an upper container 10 for preparing and conserving a liquid or semi-liquid mixture for preparing soft ice-cream and a lower cooled cylinder 20 for processing and dispensing the soft ice-cream.

The upper container 10 can be heated and cooled to subject the mixture to suitable heat treatment. In fig. 1 the known types of means are not illustrated that provide heating and cooling of the container 10.

Inside the upper container 10a pump 11 is located, the inlet of which is connected to a dip pipe 12 on the bottom of the container 11, and the outlet of which is connected to an end of a pipe 13 the other end of which is connected to the lower cylinder 20. With MP the electric motor of the pump 11 is indicated.

The lower cylinder 20 contains a helical stirrer 21 driven by an electric motor MA, that is suitable for moving the contents of the cylinder. The cylinder 20 is further fitted with a tap 22 with a knob 23 for manual extraction of the product processed in the cylinder.

This cylinder 20 is cooled by a refrigerating circuit CF that includes a motor compressor MC, a coil capacitor CO, a filter F, a solenoid valve EL, an expansion valve V, and an evaporator EV. The evaporator EV consists of a cylindrical spiral pipe that is not illustrated in detail here, which wraps and is in contact with the external wall of the cylinder 20.

At the outlet of the evaporator EV there is a thermal probe S in contact with the wall of the pipe that leads back from the evaporator EV to the motor compressor MC.

The machine is provided with a command and control unit U, provided with a processor IC, connected to the motor MP of the pump 11, to the motor MA of the stirrer 21, to the motor compressor MC and to the solenoid valve EL of the refrigerating circuit CF, and to the thermal probe S, for commanding and controlling all the functions of the machine.

The operation of the machine in fig.1 is as follows.

The upper container 10 is loaded with a suitable liquid or semi-liquid mixture M to prepare the soft ice-cream.

To prepare the ice-cream, the pump 11 is activated by driving the motor MP in such a manner that the pump 11 sends a suitable dose of liquid mixture M to the cylinder 20 through the pipe 13 together with a suitable quantity of air A sucked from the pump as indicated by the arrow.

At this point the stirrer 21 is activated by driving the motor MA and the motorcompressor MC of the refrigerating circuit and solenoid valve EL that opens the refrigerating circuit are supplied. The fluid of the refrigerating circuit performs repetitively its refrigerating cycle, that is compressed by the motor compressor MC, condensed in the capacitor CO, and evaporates in the evaporator EV, removing heat from the mixture continuously moving in the cylinder 20 through the action of the stirrer 21.

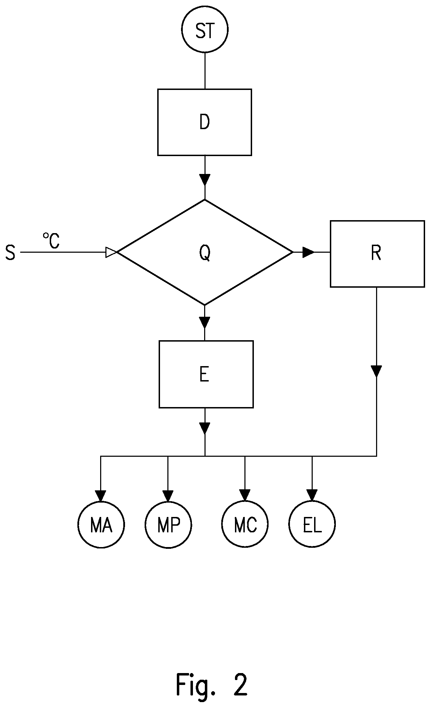

At the moment in which the soft ice-cream has formed in the cylinder 20, detected, for example, by reading the current intensity requested by the motor MA of the stirrer 21, the anti-freezing system, disclosed below and illustrated in fig. 2, intervenes.

Block ST refers to the moment of activation of the machine.

Block D indicates a delay set by the control logic of the unit U in activating the anti-freezing system. In other words, from activation of the machine a set period of time elapses, for example 30 seconds, before the anti-freezing system is activated.

After this delay, as indicated by the block Q, the control logic checks the temperature of the refrigerating fluid at the outlet of the evaporator EV via the probe S. If this temperature is very low, for example comprised between -28° and -32°, the processing cycle is interrupted and the control logic, as indicated by the block R, maintains the motor MP of the pump 11 and the motor MA of the stirrer 21 activated for a set period of time, for example 120 seconds, and also deactivates the motor compressor MC and deactivates the solenoid valve EL of the refrigerating circuit CF. If the temperature of the refrigerating fluid detected at the outlet of the evaporator EV by the probe S is for example higher than the values seen above, the control logic, as indicated by the block E, deactivates the MA and MP motors, the motor compressor MC and the solenoid valve EL.

The disclosed system avoids freezing the soft ice-cream in the layers in contact with the walls of the cylinder 20 because the ice-cream is stirred continuously until the moment in which the cold created by the refrigerating circuit CF has been transferred.

Further, the flow of liquid or semi-liquid mixture M into the cylinder 20 helps to restore normal processing conditions.

It is clear that variations on and/or additions to what has been disclosed and illustrated above can be provided.

The machine components seen above can have different functionally equivalent configurations.

For example, the machine can be devoid of the pump MP and be configured in such a manner that the liquid or semi-liquid mixture of the upper container flows by gravity to the lower cylinder dragging with it air through a calibrated air inlet.

Obviously, the disclosed and illustrated machine is usable in all situations in which the product may freeze on the walls of the cylinder, and is thus not limited to use for producing exclusively soft ice-cream.

## Claims

1. Machine for producing food mixtures in general, in particular soft ice-cream, comprising a first container (10) for preparing and conserving a liquid or semi-liquid mixture from which the ice-cream is obtainable, a second container (20) for processing the ice-cream and dispensing the ice-cream in preset doses, stirring means (MA,21) for moving the product inside the second container (20), a refrigerating circuit (CF), associated with the second container (20), in which a refrigerating fluid flows that performs a heat exchange with the second container (20) between an inlet and outlet for cooling the second container (20), transferring means (MP,11,12,13) for transferring the liquid or semi-liquid mixture from the first (10) to the second (20) container, sensor means (S) for detecting the temperature of the refrigerating fluid exiting the second container (20) and command and control means (U) connected to the stirring means (MA,21), to the refrigerating circuit (CF) and to the sensor means (S), **characterised in that** said command and control means (U) activates the stirring means (MA,21) and preventively deactivates the refrigerating circuit (CF) in the second container (20) for a preset time when the temperature of the refrigerating fluid is below a preset temperature threshold at the outlet from the second container (20) and **in that** the command and control means (U) is also connected to the transferring means (MP,11,12,13) to activate the transferring means (MP,11,12,13) for a preset time when the temperature of the refrigerating fluid is below said preset threshold.

2. Machine according to claim 1, wherein delaying means (D) is provided for delaying said activation and deactivation by the command and control means (U) at the moment of start-up of the machine.

3. Machine according to any preceding claim, wherein the sensor means comprises a thermal probe (S) in contact with the wall of a pipe of the refrigerating circuit (CF) at the outlet from the second container (20).

4. Machine according to any preceding claim, wherein the transferring means comprises a pump (MP) that is suitable for transferring a preset dose of liquid or semi-liquid mixture together with a preset quantity of air from the first container (10) to the second container (20).

5. Machine according to claim 1, wherein the transferring means comprises a device for delivering the liquid or semi-liquid mixture by gravity from the first (10) to the second (20) container.

## Patentansprüche

1. Maschine zur Herstellung von Lebensmittelgemischen im Allgemeinen, insbesondere Softeis, umfassend einen ersten Behälter (10) zum Herstellen und Konservieren eines flüssigen oder halbflüssigen Gemisches, aus welchem das Eis erhältlich ist, einen zweiten Behälter (20) zum Verarbeiten des Eises und Ausgeben des Eises in vorher eingestellten Dosen, Rührmittel (MA,21) zum Bewegen des Produkts in dem zweiten Behälter (20), einen Kühlkreislauf (CF), verbunden mit dem zweiten Behälter (20), in welchem eine Kühlflüssigkeit fließt, die einen Wärmeaustausch mit dem zweiten Behälter (20) zwischen einem Einlass und Auslass zum Kühlen des zweiten Behälters (20) ausführt, Übertragungsmittel (MP,11,12,13) zum Übertragen des flüssigen oder halbflüssigen Gemisches von dem ersten (10) zu dem zweiten (20) Behälter, Messfühlermittel (S) zum Nachweisen der Temperatur der Kühlflüssigkeit, die den zweiten Behälter (20) verlässt, und Steuer- und Regelmittel (U), verbunden mit dem Rührmittel (MA,21), mit dem Kühlkreislauf (CF) und mit dem Messfühlermittel (S), **dadurch gekennzeichnet, dass** das Steuer- und Regelmittel (U) das Rührmittel (MA,21) aktiviert und vorbeugend den Kühlkreislauf (CF) in dem zweiten Behälter (20) für einen vorher eingestellten Zeitraum desaktiviert, wenn die Temperatur der Kühlflüssigkeit unter einem vorher eingestellten Temperaturschwellenwert an dem Auslass von dem zweiten Behälter (20) ist, und dass das Steuer- und Regelmittel (U) auch mit dem Übertragungsmittel (MP,11,12,13) verbunden ist, um das Übertragungsmittel (MP,11,12,13) für einen vorher eingestellten Zeitraum zu aktivieren, wenn die Temperatur der Kühlflüssigkeit unter dem vorher eingestellten Schwellenwert ist.

2. Maschine nach Anspruch 1, wobei ein Verzögerungsmittel (D) zum Verzögern der Aktivierung und Desaktivierung durch das Steuer- und Regelmittel (U) im Moment der Inbetriebnahme der Maschine bereitgestellt ist.

3. Maschine nach einem vorangehenden Anspruch, wobei das Messfühlermittel eine Wärmesonde (S) in Kontakt mit der Wand eines Rohrs des Kühlkreislaufs (CF) an dem Auslass von dem zweiten Behälter (20) umfasst.

4. Maschine nach einem vorangehenden Anspruch, wobei das Übertragungsmittel eine Pumpe (MP) umfasst, die zum Übertragen einer vorher eingestellten Dosis von flüssigem oder halbflüssigem Gemisch zusammen mit einer vorher eingestellten Luftmenge aus dem ersten Behälter (10) zu dem zweiten Behälter (20) geeignet ist.

5. Maschine nach Anspruch 1, wobei das Übertragungsmittel eine Vorrichtung zum Abgeben des flüssigen oder halbflüssigen Gemisches durch Schwerkraft von dem ersten (10) zu dem zweiten (20) Behälter umfasst.

## Revendications

1. Machine pour produire des mélanges alimentaires en général, en particulier de la glace à l'italienne, comprenant un premier conteneur (10) pour préparer et conserver un mélange liquide ou semi-liquide à partir duquel la glace peut être obtenue, un second conteneur (20) pour traiter la glace et distribuer la glace en doses définies à l'avance, un moyen d'agitation (MA, 21) pour déplacer le produit à l'intérieur du second conteneur (20), un circuit de réfrigération (CF), associé au second conteneur (20), dans lequel un fluide de réfrigération s'écoule qui effectue un échange de chaleur avec le second conteneur (20) entre une entrée et une sortie pour refroidir le second conteneur (20), un moyen de transfert (MP, 11, 12, 13) pour transférer le mélange liquide ou semi-liquide du premier (10) au second (20) conteneur, un moyen capteur (S) pour détecter la température du fluide de réfrigération à la sortie du second conteneur (20) et un moyen d'ordre et de commande (U) relié au moyen d'agitation (MA, 21), au circuit de réfrigération (CF) et au moyen capteur (S), **caractérisée en ce que** ledit moyen d'ordre et de commande (U) active le moyen d'agitation (MA, 21) et désactive préventivement le circuit de réfrigération (CF) dans le second conteneur (20) pendant un temps défini à l'avance lorsque la température du fluide de réfrigération est au-dessous d'un seuil de température défini à l'avance à la sortie du second conteneur (20) et **en ce que** le moyen d'ordre et de commande (U) est également relié au moyen de transfert (MP, 11, 12, 13) pour activer le moyen de transfert (MP, 11, 12, 13) pendant un temps défini à l'avance lorsque la température du fluide de réfrigération est ci-dessous dudit seuil défini à l'avance.

2. Machine selon la revendication 1, dans laquelle un moyen de retard (D) est prévu pour retarder lesdites activation et désactivation par le moyen d'ordre et de commande (U) au moment du démarrage de la machine.

3. Machine selon l'une quelconque des revendications précédentes, dans laquelle le moyen capteur comprend une sonde thermique (S) en contact avec la paroi d'un tuyau du circuit de réfrigération (CF) à la sortie du second conteneur (20).

4. Machine selon l'une quelconque des revendications précédentes, dans laquelle le moyen de transfert comprend une pompe (MP) qui est appropriée pour transférer une dose définie à l'avance de mélange liquide ou semi-liquide en même temps qu'une quantité définie à l'avance d'air du premier conteneur (10) au second conteneur (20).

5. Machine selon la revendication 1, dans laquelle le moyen de transfert comprend un dispositif pour délivrer le mélange liquide ou semi-liquide par gravité du premier (10) au second (20) conteneur.
